# FASCICULE DE BREVET EUROPEEN

(11) **EP 1 757 777 B1**
(45) Date de publication et mention de la délivrance du brevet: **15.10.2008**
(21) Numéro de dépôt: 06119569.9
(22) Date de dépôt: 25.08.2006
(51) Int. Cl.: F01D 25/28, F02C 7/20

(54) **Procédé d'assemblage d'une turbomachine**
Verfahren zum Zusammenbau einer Turbomaschine
Method to assemble a turbomachine

(30) Priorité: 26.08.2005 FR 0552577
(43) Date de publication de la demande: 28.02.2007
(73) Titulaire: SNECMA, 75015 Paris (FR)
(72) Inventeur: Bergerot, François, 77190, Dammarie les Lys (FR); Leeder, Laurent, 91250, Saint-Germain les Corbeil (FR); Malterre, Jacques, 77950, Moisenay (FR); Souart, Bernard, 77176, Savigny le Temple (FR); Thomas, Hubert, 77176, Savigny le Temple (FR)
(74) Mandataire: David, Daniel

(56) Documents cités:
- FR-A- 2 515 734
- FR-A- 2 644 843
- GB-A- 2 177 160

## Description

La présente invention concerne le domaine des turbomachines et vise en particulier les moteurs à turbine à gaz multi-corps. Elle se rapporte aux opérations d'assemblage des moteurs et en particulier au montage du module de turbine basse pression sur un corps haute pression.

Un turboréacteur à turbosoufflante avant et à double corps par exemple, comprend un corps basse pression BP et un corps haute pression HP. Le corps BP tourne à une première vitesse et la turbine BP entraîne la soufflante. Le corps HP tourne à une vitesse différente de celle de la turbine BP. Les arbres des deux corps sont concentriques. L'arbre basse pression est guidé en rotation dans des paliers supportés par la structure fixe du moteur, situés respectivement en aval de la turbine et en amont du compresseur haute pression. L'arbre du corps haute pression est guidé en rotation par des paliers supportés par la structure fixe du moteur en amont et par l'arbre du corps basse pression au moyen de paliers inter arbres en aval. Ce dernier est du type à rouleaux et situé, au moins selon un moteur connu, entre la turbine haute pression et la turbine basse pression. Le palier comprend une bague intérieure équipée de rouleaux maintenus par une cage sur l'arbre BP et une bague extérieure montée avec serrage à froid dans l'arbre HP. Le montage de ce palier, c'est-à-dire l'assemblage de la bague extérieure avec l'ensemble formé des rouleaux, de la cage et de la bague intérieure, est réalisé en même temps que l'accostage de la turbine basse pression où l'arbre préalablement monté avec la turbine basse pression est guidé dans le corps haute pression. Par le terme accostage, on désigne ici tout ou partie du déplacement en translation du module de turbine BP jusqu'à ce que la bride du carter externe de celui-ci vienne en contact avec la bride correspondante du module HP.

Il s'ensuit que le montage du palier inter arbres est réalisé en aveugle. L'opérateur n'a aucune visibilité pour surveiller, en particulier, l'engagement des rouleaux dans le rotor HP puis dans la bague extérieure. Cette opération comporte de forts risques de dégradation du palier si les conditions ne sont pas maîtrisées. Le risque le plus important pour le palier est un contact dur des rouleaux contre l'écrou de retenue de la bague extérieure et la bague elle-même.

Actuellement, les moyens utilisés ne permettent pas d'assurer un montage de la turbine BP sans risque pour ce palier inter-arbres, en raison du mode de chauffage utilisé et du positionnement imprécis de la turbine BP. En particulier, le chauffage de la partie HP (équipée de la bague extérieure) est réalisé par l'intérieur du tourillon au moyen d'un diffuseur alimenté par une chaufferette. La mesure de température est effectuée manuellement par une sonde appliquée sur l'extérieur de la partie HP. Les investigations effectuées sur ce mode opératoire ont révélé plusieurs inconvénients :
- une hétérogénéité relativement importante, de l'ordre de 20°C, des niveaux de température des pièces chauffées,
- un risque élevé d'apport de pollution par l'air ambiant prélevé pour le chauffage et le dispositif de chauffe lui-même, et
- un risque élevé de détérioration de la bague extérieure du roulement par contact du diffuseur. Ce risque est d'autant plus élevé que le jeu entre le diffuseur et la bague extérieure est de quelques millimètres seulement, et l'ensemble est installé sur des roulettes risquant ainsi d'être déplacé par inadvertance par les opérateurs.

Le document FR-2 644 943 constitue l'état de la technique antérieur.

L'invention a pour objectif d'améliorer les conditions d'assemblage des turbines BP sur un moteur du type décrit ci-dessus pour réduire les risques de dégradation du palier inter-arbres.

Plus généralement l'invention se rapporte à l'assemblage d'une turbomachine, notamment un moteur à turbine à gaz, comprenant au moins un premier module et un deuxième module avec un palier comportant une bague extérieure montée par serrage à froid à l'intérieur d'un tourillon solidaire du premier module et une bague intérieure solidaire du deuxième arbre, selon lequel le deuxième module est assemblé sur le premier module par engagement du deuxième arbre, avec ladite bague intérieure, à l'intérieur du tourillon comportant ladite bague extérieure.

Conformément à l'invention, on atteint les objectifs visés avec un procédé d'assemblage caractérisé par le fait qu'il comprend les étapes suivantes :
- accostage du deuxième module avec le deuxième arbre dans le premier module jusqu'à une distance déterminée du tourillon,
- centrage du deuxième arbre par rapport au tourillon, ledit centrage étant piloté à partir de la mesure d'écarts de distance par rapport à une référence sur le tourillon,
- dilatation de la bague extérieure par chauffage de la surface externe du tourillon,
- achèvement de l'accostage du deuxième module.

Dans le cas particulier exposé plus haut, le premier module est le corps haute pression HP, et le deuxième module est le module de turbine basse pression BP, le tourillon étant dans le prolongement de l'arbre en lui étant solidaire, premier arbre, du corps HP et le deuxième arbre étant l'arbre de turbine BP.

Cependant le tourillon peut aussi être une pièce creuse, fixe ou mobile en rotation qui forme le support de la bague extérieure du roulement.

En pilotant le centrage de l'arbre par rapport au tourillon, on garantit un positionnement correct qui permet, une fois le tourillon dilaté, un accostage sans incident. En outre le chauffage du tourillon par l'extérieur libère l'espace permettant l'engagement de l'arbre et en conséquence réduit le temps de montage.

Conformément à une autre caractéristique du procédé, dans une étape préalable à l'étape d'accostage du deuxième module, on chauffe le tourillon pour le montage de la bague extérieure dans le tourillon HP.

La bague intérieure est de préférence pourvue de l'élément de roulement du palier. En particulier, l'élément de roulement est constitué de rouleaux maintenus ensemble dans une cage.

De préférence, on met en place sur le tourillon un moyen de chauffage annulaire entre l'étape d'accostage et de dilatation du tourillon par chauffage. Pendant cette étape, on mesure la température du tourillon ou de la bague et on commande le chauffage jusqu'à atteindre une température déterminée.

Conformément à une autre caractéristique du procédé, on achève l'accostage du deuxième module lorsque les valeurs mesurées des températures et des écarts de distance par rapport au tourillon sont à l'intérieur de limites prédéterminées, assurant un assemblage sans incident.

L'invention porte également sur le dispositif pour la mise en oeuvre du procédé, comprenant un bâti mobile supportant un moyen de chauffage annulaire de tourillon, au moins une sonde de température agencée pour mesurer la température du tourillon, et un moyen de mesure de l'écart de distance radiale entre un arbre à monter dans le tourillon et une référence sur le tourillon.

De préférence, le support du moyen de chauffage sur le bâti est agencé pour permettre la mise en place du moyen de chauffage autour du tourillon d'une part et une position de repli d'autre part. Plus particulièrement, le bâti comprend un moyen formant butée pour immobiliser le bâti par rapport au module fixe du moteur.

Conformément à une autre caractéristique du procédé, le moyen de chauffage annulaire comprend un diffuseur annulaire de gaz chaud alimenté par au moins deux chaufferettes. Avantageusement, la sonde de mesure de la température est solidaire du moyen de chauffage. Le moyen de mesure des écarts de distance radiale entre la référence et l'arbre est solidaire du bâti, et du moyen de chauffage en particulier.

Le dispositif peut aussi comprendre un moyen de contrôle recevant le signal de mesure de la température et le signal de mesure de distance, et indiquer les corrections thermiques et géométriques en fournissant les informations indiquant si l'accostage peut être achevé conformément aux critères de qualité imposés.

D'autres caractéristiques et avantages ressortiront de la lecture de la description qui suit d'un mode de réalisation non limitatif de l'invention, appliquée au montage d'un module de turbine basse pression dans le corps haute pression d'un moteur à turbine à gaz à double corps, se référant aux dessins annexés sur lesquels :
- la figure 1 montre un moteur en cours de montage ;
- la figure 2 montre le détail du palier inter-arbres avant assemblage ;
- la figure 3 montre la même zone que la figure 2 après assemblage ;
- les figures 4 à 6 montrent un appareillage supportant un dispositif de chauffage, respectivement en place pour être utilisé et dans une position de repli ;
- la figure 7 montre en détail le dispositif de chauffage en place pour être utilisé ;
- la figure 8 est une vue en coupe axiale du dispositif de la figure 7 en place ;
- la figure 9 représente un détail du dispositif montrant un capteur de température.

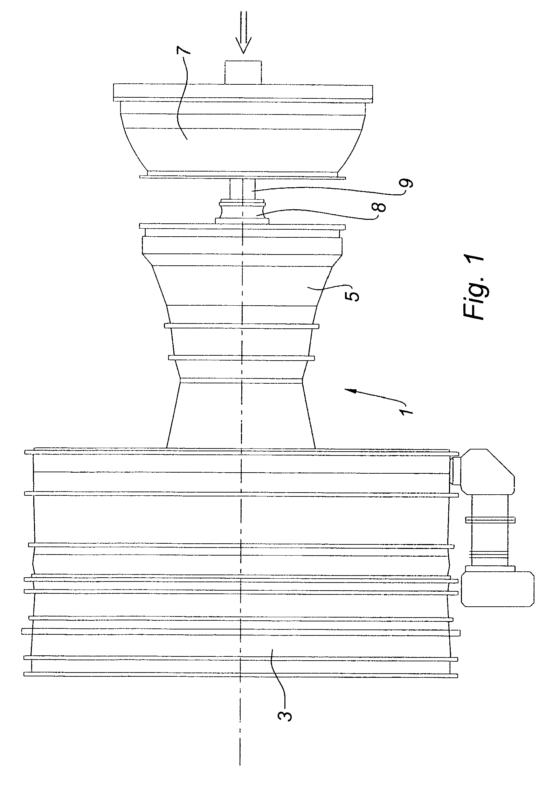

La figure 1 montre un moteur 1 en cours de montage dont on ne voit que les carters extérieurs. Il s'agit ici d'un turboréacteur à double flux et double corps tel que le CFM56. Il comprend une soufflante avant 3 et un module 5, dit premier module, constitué par le corps haute pression HP avec son arbre, dit premier arbre. Ces éléments sont déjà assemblés. On est ici en train de monter le module de turbine basse pression BP 7, dit deuxième module, dont l'arbre 9, dit deuxième arbre, est déjà engagé dans le corps HP. La zone critique se situe au niveau de la zone 8 du palier inter-arbres dont la visibilité est nulle.

Dans la suite de la description, on décrit donc le montage de ce deuxième module, le module basse pression, dans le premier module, le corps haute pression.

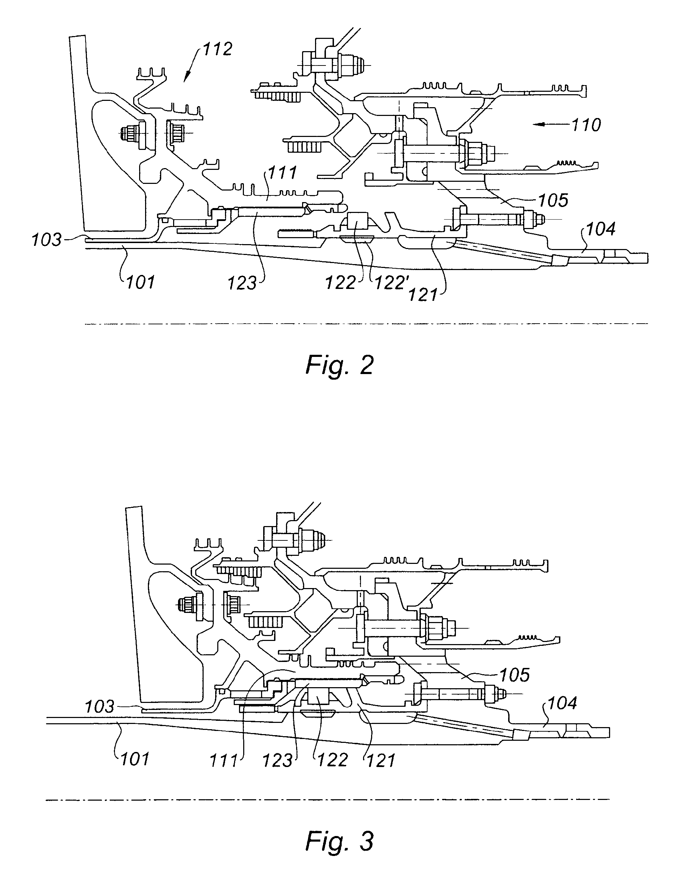

Sur la figure 2, on voit cette zone en coupe plus en détail. L'arbre 101, deuxième arbre, du deuxième module, turbine BP, est logé dans l'arbre 103, premier arbre, du premier module, le corps HP. L'arbre 101 comprend en son extrémité, à droite sur la figure, un tourillon 104 pour le montage d'un palier. Une bride radiale 105 permet le montage des différents éléments constituant la turbine BP 110 visible partiellement.

L'arbre 103 du corps HP se prolonge par un tourillon 111 à son extrémité aval. On voit une partie de turbine 112 du corps HP seulement.

Le palier inter-arbres 120, connu ne soi, comprend une bague intérieure 121, fixée sur l'arbre 101 avec les éléments de roulement, tels que des rouleaux 122, dont la cage 122' est sertie sur la bague 121. La bague extérieure 123 est montée serrée à froid à l'intérieur du tourillon 111. Elle est verrouillée en place par un écrou 125. La figure 3 montre les mêmes éléments après assemblage. L'assemblage est effectué par déplacement en translation du module de turbine BP 110 avec l'arbre 101 vers la gauche par rapport à la figure 2, après dilatation du tourillon ensemble avec la bague extérieure, par chauffage, le module HP étant fixe. On comprend qu'en raison des faibles tolérances, le risque est grand d'un contact entre les pièces du roulement. Ce contact dur peut être la cause de griffures, rainures ou amorces d'écaillages qui sont susceptibles de conduire à la rupture du roulement.

La société demanderesse a mis au point un procédé et un appareillage permettant un montage sécurisé du module BP dans cet environnement.

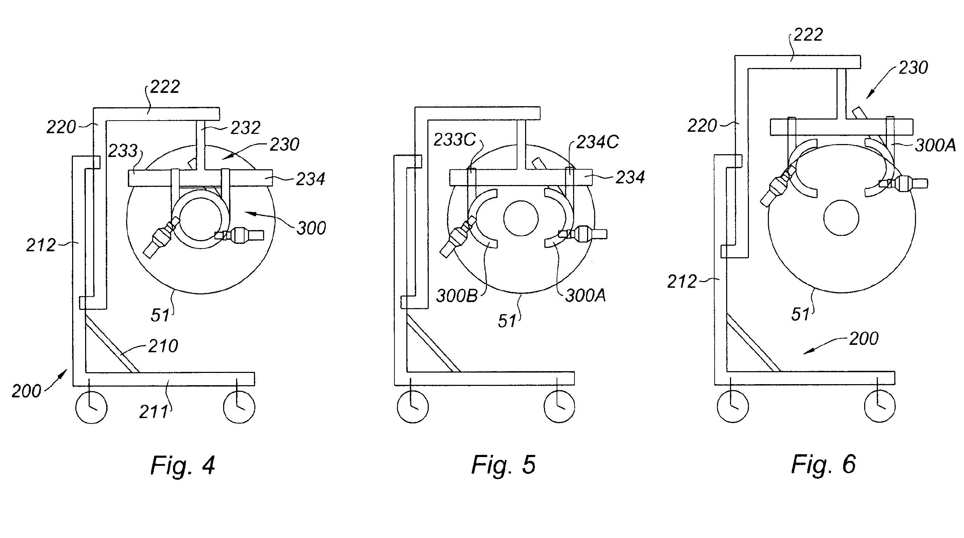

L'appareillage 200 comprend un bâti 210 mobile, auquel est suspendu un moyen de chauffage du tourillon de corps HP. Cet ensemble est représenté sur les figures 4, 5 et 6 dans plusieurs positions.

Le bâti 210 comprend un chariot 211, monté sur des roulettes, avec un cadre vertical 212. Un potence 220 est montée sur ce cadre pourvu de rails de manière à pouvoir coulisser entre une première position basse, active ou d'utilisation, représentée sur la figure 4 et un deuxième position haute, de repli, que l'on voit sur la figure 6.

Un support 230 en forme de T renversé est fixé à l'extrémité du bras horizontal 222 de la potence 220.

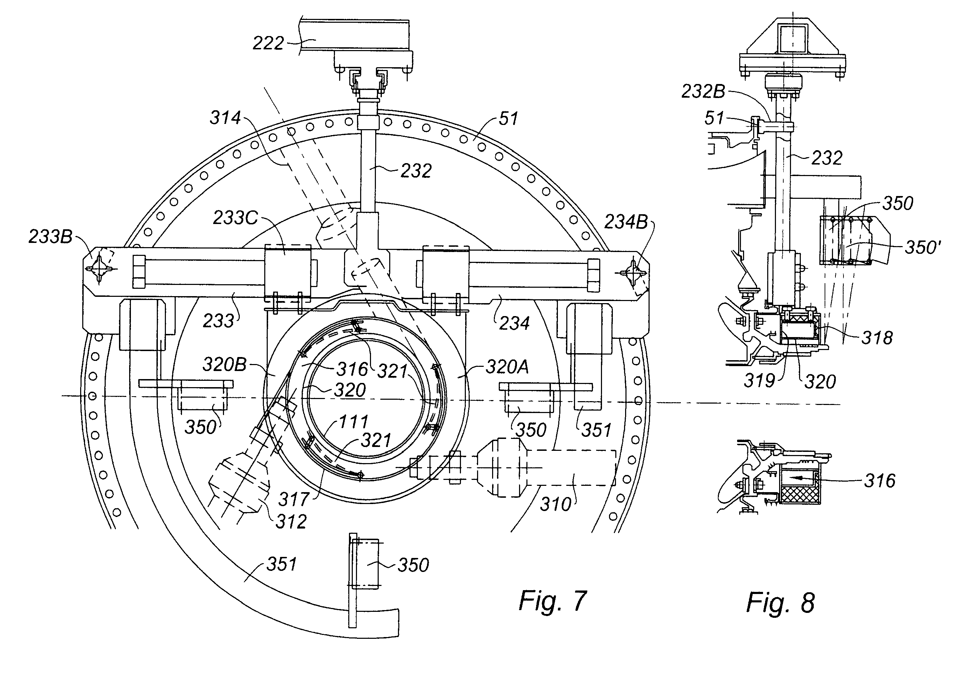

Le support 230 comprend un bras vertical 232 fixé rigidement par rapport au bras horizontal 222 de la potence, et deux branches horizontales 233 et 234. Ces dernières sont agencées pour supporter deux coulisseaux 233C et 234C supportant chacun une moitié du dispositif de chauffage annulaire 300, 300A et 300B respectivement, voir figure 7.

L'appareillage est représenté en position active sur la figure 4. Le support 230 est en appui contre la bride 51 du carter du module du corps HP. A partir de cette position, on dégage le dispositif de chauffage en écartant les deux moitiés 300A et 300B qui se déplacent parallèlement aux deux branches 233 et 234 avec leur coulisseau respectif 233C et 234C. Une fois le dispositif de chauffage ouvert on le dégage vers le haut en commandant le coulissement de la potence 220 dans les rails du cadre 212. L'appareillage est représenté dans la position haute de repli sur la figure 6.

La mise en place du dispositif de chauffage s'effectue selon la séquence inverse.

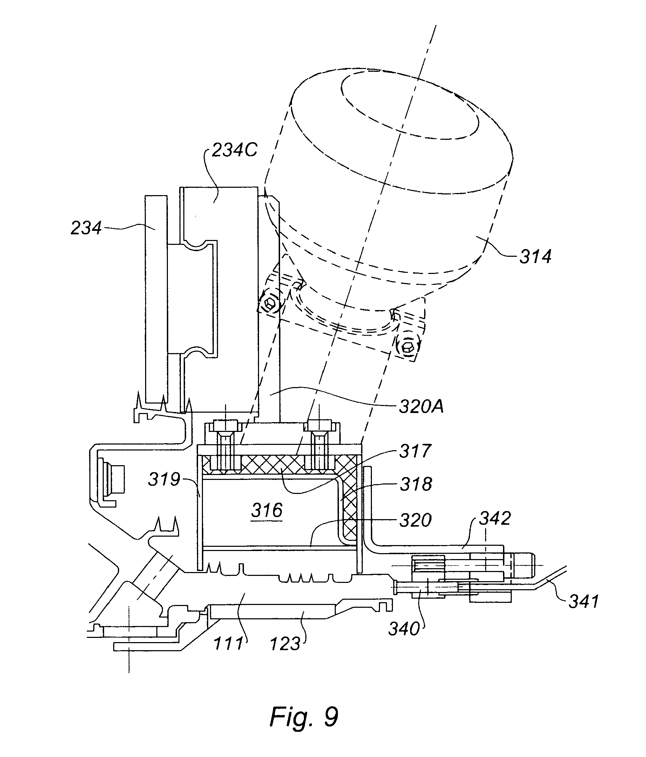

On décrit plus en détail le dispositif de chauffage en relation avec les figures 7, 8 et 9. La figure 7 qui est une vue agrandie de la figure 4 montre le dispositif de chauffage avec trois chaufferettes 310, 312 et 314, en traits pointillés, disposées sensiblement tangentiellement à une enceinte annulaire 316 formant diffuseur et répartiteur d'air. Elles sont équidistantes les unes des autres et délivrent un gaz chauffé à une température contrôlée, de l'air notamment, selon au moins une composante tangentielle. On voit sur la figure 9 que les chaufferettes en raison de l'encombrement de la suspension ne peuvent être disposées strictement tangentiellement à la chambre annulaire 316. Cette dernière est délimitée par une enveloppe cylindrique 317 et deux parois, 318 et 319, perpendiculaires à l'axe du moteur. Une paroi cylindrique intérieure 320 est perforée et ménage un espace avec le tourillon 111. L'enveloppe comprend une matière isolante thermiquement comme on le voit sur les parois 317 et 318.

Des déflecteurs 321 sont disposés à l'intérieur de l'enceinte annulaire entre deux chaufferettes consécutives. Ces déflecteurs sont arqués et incliné vers l'axe du moteur. L'extrémité recevant le flux gazeux d'une chaufferette adjacente est à une distance plus grande de l'axe que l'autre extrémité. De cette façon les flux de gaz débouchant dans l'enceinte sont à la fois entraînés dans un mouvement de rotation autour de l'axe du moteur avec une composante centripète vers la paroi perforée 320.

La paroi 318 du côté extrémité du tourillon vient au contact de ce dernier. La paroi 319 de l'autre côté ménage un espace ou des ouvertures de fuite des gaz qui vont chauffer la masse plus épaisse à cet endroit du tourillon. Les éléments de l'enveloppe 317, 318, 319 définissant l'enceinte annulaire 316 sont en deux parties rattachés à leur support respectif 320 A et B. Ces supports sont eux-mêmes suspendus à un coulisseau, 233C et 234C respectivement.

Le support 230 est en appui contre la bride 51 par des butées dont l'une est visible sur la figure 8. Il s'agit de la butée 232B solidaire du bras vertical 232 du support. Les bras 233 et 234 comportent également des moyens de calage 234B et 233B que l'on voit sur la figure 7. Les cales sont escamotables et viennent se positionner en arrière de la bride 51 pour assurer l'immobilisation du support sur la bride 51.

Le dispositif sert de support à trois thermocouples 340 répartis à équidistance les uns des autres. La figure 9 est une vue partielle en coupe du dispositif de chauffage 300 au niveau de l'un des thermocouples 340. Celui-ci est en appui contre la surface aval du tourillon pour en capter la température. Un câble 341 relie le capteur au centre de contrôle qui comprend la fonction notamment de commander les chaufferettes en fonction de la température à atteindre. On voit sur cet exemple que le thermocouple est attaché à la paroi 318 par le moyen d'une équerre 342.

Le dispositif supporte également trois organes 350 de mesure de la distance entre le tourillon 111 et l'arbre BP à l'intérieur de ce dernier. Ils sont répartis à équidistance les uns des autres, par exemple à 3 heures, 6 heures et 9 heures, en vue arrière du moteur. On procède à l'alignement de l'arbre BP en comparant les écarts de mesure des distances sur ces trois points et en agissant corrélativement sur le positionnement transversal de l'arbre dans le système de manutention. Les organes de mesure des distances 350 sont de type laser par exemple. On les a représentés schématiquement sur les figures 7 et 8. Ils sont montés sur des bras supports 351 fixés sur les bras horizontaux du supports 230. Ils sont mobiles entre deux positions comme cela apparaît sur la figure 8 qui montre un organe de mesure positionne en haut par rapport à l'axe du moteur. Quand ils sont dans la position 350 de la figure, ils visent le tourillon ; en les décalant dans la position 350', ils visent l'arbre basse pression. On peut ainsi en déduire le jeu entre l'arbre et le tourillon. Les trois ensemble répartis autour du tourillon permettent de connaître avec précision la position relative des deux axes. On procède à la correction en déplaçant par les moyens de commande appropriés le module de turbine dans l'espace.

Une console de contrôle est montée sur le bâti. Elle reçoit les signaux des capteurs de température ainsi que des mesures des distances. Elle comprend également des moyens pour fournir des signaux d'alarme du type par exemple feu vert feu rouge pour informe l'opérateur de la situation et de l'état de préparation du palier avant accostage.

Le déroulé des opérations est le suivant.

Le moteur est partiellement monté. La soufflante 3 et le corps HP 5 sont assemblés. Le module BP 7 est en attente.
a) Pour le montage de la bague extérieure 123 dans le tourillon,
   - on met en place le dispositif comme cela est représenté sur la figure 7, et
   - on chauffe le tourillon 111 à la température spécifiée pour le montage; l'obtention de cette température autorise la mise en position de repli comme sur la figure 6, le montage de la bague 123, et le serrage de l'écrou 125 ;
b) Pour le centrage de l'arbre de turbine,
   - on met l'appareillage en position d'utilisation,
   - on introduit l'arbre BP 101 dans le corps HP, et
   - on active le système de mesure des distances 350. Les mesures relevées par les organes 350 permettent le centrage de l'arbre 101, dans les limites spécifiées, par rapport au tourillon.
c) Pour le chauffage de l'ensemble tourillon- bague extérieure,
   - on met l'appareillage en position d'utilisation, et
   - on déclenche le chauffage. Le chauffage est piloté en fonction des températures mesurées par les thermocouples 340 jusqu'à ce que la température de consigne soit atteinte, dans les limites spécifiées. L'obtention de la température dans la plage spécifiée autorise, la mise en positon de repli de l'appareillage.

On termine le montage en procédant à l'accostage final.

Le dispositif de l'invention confère à l'ensemble la maîtrise simultanée des deux conditions majeurs de montage pour assurer un assemblage du roulement sans risque.

On comprend en outre que l'invention n'est pas limitée au montage du module de turbine BP dans un corps HP d'un moteur à turbine à gaz. Elle s'applique à toutes les situations équivalentes de montage d'un deuxième module assemblé par un palier dans un premier module.

## Revendications

1. Procédé d'assemblage d'une turbomachine, notamment un moteur à turbine à gaz, comprenant au moins un premier module et un deuxième module, un deuxième arbre (101) assemblé par un palier (120), ledit palier (120) comportant une bague extérieure (123) montée par serrage à froid à l'intérieur d'un tourillon (111) solidaire du premier module et une bague intérieure (121) solidaire du deuxième arbre (101), selon lequel le deuxième module est assemblé sur le premier module par engagement du deuxième arbre avec ladite bague intérieure (121) à l'intérieur du tourillon comportant ladite bague extérieure, **caractérisé par le fait qu'**il comprend les étapes suivantes :
- accostage du deuxième module avec le deuxième arbre (101) jusqu'à une distance déterminée du tourillon (111),
- centrage du deuxième arbre par rapport au tourillon (111), ledit centrage étant piloté à partir de la mesure d'écarts de distance par rapport à une référence sur le tourillon,
- dilatation du tourillon (111) par chauffage de sa surface externe,
- achèvement de l'accostage du deuxième arbre (101).

2. Procédé selon la revendication 1, le moteur étant à double corps, selon lequel le premier module est le corps haute pression HP, et le deuxième module est le module de turbine basse pression BP, et le deuxième arbre étant l'arbre de turbine BP.

3. Procédé selon la revendication 2 dont le premier module comprend un premier arbre, le tourillon (111) étant dans son prolongement en lui étant solidaire.

4. Procédé de montage selon la revendication 1, 2 ou 3, comprenant une étape préalable avant l'étape d'accostage du deuxième module, de chauffage du tourillon (111) pour le montage de la bague extérieure (123) dans ledit tourillon.

5. Procédé selon la revendication précédente comprenant la mise en place sur le tourillon (111) d'un moyen de chauffage (300) annulaire entre l'étape d'accostage et la dilatation du tourillon par chauffage.

6. Procédé selon la revendication 1 selon lequel on mesure la température du tourillon (111) ou de la bague extérieure (123) et on commande le chauffage jusqu'à atteindre et maintenir une température déterminée.

7. Procédé selon la revendication précédente selon lequel on achève l'accostage du deuxième module lorsque les valeurs des températures d'une part et des écarts de distance par rapport au tourillon (111) d'autre part sont à l'intérieur de limites prédéterminées.

8. Dispositif pour la mise en oeuvre du procédé selon la revendication 1 comprenant un bâti (210) mobile supportant un moyen de chauffage annulaire (300) de tourillon, au moins une sonde de température (340) agencée pour mesurer la température du tourillon, et un moyen (350) de mesure de l'écart de distance radiale entre un arbre à monter à l'intérieur du tourillon et une référence sur le tourillon.

9. Dispositif selon la revendication précédente dont le support du moyen de chauffage sur le bâti est agencé pour permettre la mise en place du moyen de chauffage autour du tourillon d'une part et une position de repli d'autre part.

10. Dispositif selon la revendication 8 ou 9 dont le bâti comprend un moyen formant butée pour immobiliser le moyen de chauffage et les moyens de mesure par rapport au module fixe du moteur.

11. Dispositif selon la revendication 8 dont le moyen de chauffage annulaire comprend un diffuseur annulaire (320) de gaz chaud alimenté par au moins deux chaufferettes (310, 312, 314).

12. Dispositif selon la revendication 8 dont la sonde de mesure de la température est solidaire du moyen de chauffage.

13. Dispositif selon la revendication 8 dont le moyen de mesure des écarts de distance radiale entre la référence et l'arbre est solidaire du bâti.

14. Dispositif selon la revendication 8 comprenant un moyen de contrôle recevant le signal de mesure de la température et le signal de mesure de distance et fournissant les informations nécessaires à l'opération d'accostage.

## Claims

1. A method of assembly of a turbomachine, in particular of a gas turbine engine, comprising at least a first module and a second module a second shaft (101) assembled by a bearing (120), said bearing (120) comprising an outer ring (123) shrink-fitted inside a journal (111) integral with the first module and an inner ring (121) integral with the second shaft (101), according to which the second module is assembled on the first module by engagement of the second shaft, with said inner ring (121), inside the journal comprising said outer ring, wherein it comprises the following steps:
- mating the second module with the second shaft (101) up to a determined distance from the journal (111),
- centering the second shaft with respect to the journal (111), said centering being controlled on the basis of measuring distance deviations with respect to a reference on the journal,
- expansion of the journal (111) by heating its outer surface,
- completion of the mating of the second shaft (101).

2. The method as claimed in claim 1, the engine being a double-body engine, wherein the first module is the high pressure (HP) body and the second module is the low pressure (LP) turbine, and the second shaft being the LP turbine shaft.

3. The method as claimed in claim 2, wherein the first module comprises a first shaft, the journal (111) being in its extension and integral with it.

4. The assembly method as claimed in claim 1, 2 or 3, wherein it comprises a step, prior to the step of mating the second module, of heating the journal (111) for the fitting of the outer ring (123) in said journal.

5. The method as claimed in the preceding claim, wherein it comprises the putting into position on the journal (111) of an annular heating means (300) between the mating step and the expansion of the journal by heating.

6. The method as claimed in claim 1, wherein the temperature of the journal (111) or of the outer ring (123) is measured and the heating is controlled until a determined temperature is reached.

7. The method as claimed in the preceding claim wherein the mating of the second module is carried out when the values of the temperatures on the one hand and the distance deviations with respect to the journal (111) on the other hand are within predetermined limits.

8. A device for the implementation of the method as claimed in claim 1, wherein it comprises a frame (210) supporting an annular journal-heating means (300), at least one temperature probe (340) arranged to measure the temperature of the journal, and a means (350) of measuring the radial distance deviation between a shaft to be fitted inside the journal and a reference on the journal.

9. The device as claimed in the preceding claim, wherein the support of the heating means on the frame is arranged to allow the putting into position of the heating means around the journal on the one hand and in a retracted position in the other hand.

10. The device as claimed in claim 8 or 9, wherein the frame comprises a means forming a stop to immobilize the heating means and the measuring means with respect to the fixed module of the engine.

11. The device as claimed in claim 8, wherein the annular heating means comprise an annular diffuser (320) of hot gas fed by at least two heaters (310, 312, 314).

12. The device as claimed in claim 8, wherein the temperature measuring probe is integral with the heating means.

13. The device as claimed in claim 8, wherein the means of measuring radial distance deviations between the reference and the shaft is integral with the frame.

14. The device as claimed in claim 8, wherein it comprises a control means receiving the temperature measurement signal and the distance measurement signal and providing the information necessary for the mating operation.

## Patentansprüche

1. Verfahren zum Zusammenbau einer Turbomaschine, insbesondere eines Gasturbinenmotors, der mindestens ein erstes Modul und ein zweites Modul sowie eine zweite Welle (101) aufweist, die in einem Lager (120) sitzt, wobei dieses Lager (120) einen Außenring (123) umfasst, der durch Kalteinspannen im Inneren eines mit dem ersten Modul fest verbundenen Drehzapfens (111) eingesetzt ist, und einen Innenring (121) umfasst, der mit der zweiten Welle (101) fest verbunden ist, wobei gemäß diesem Verfahren das zweite Modul an dem ersten Modul angebaut wird, indem die zweite Welle mit diesem Innenring (121) im Inneren des Drehzapfens (111), der den genannten Außenring enthält, in Eingriff kommt,
**dadurch gekennzeichnet,**
**dass** es die folgenden Verfahrensschritte umfasst:
- Ankoppeln des zweiten Moduls mit der zweiten Welle (101) bis auf einen bestimmten Abstand zu dem Drehzapfen (111),
- Zentrierung der zweiten Welle auf den Drehzapfen (111), wobei diese Zentrierung von der Abstandsabweichungsmessung, bezogen auf einen Bezugswert, zu dem Drehzapfen gesteuert wird,
- Ausdehnung des Drehzapfens (111) durch Erwärmen seiner Außenfläche,
- Vollenden des Ankoppelns der zweiten Welle (101).

2. Verfahren nach Anspruch 1, wobei der Motor zweistufig ist, wobei das erste Modul die Hochdruckstufe HP ist und das zweite Modul das Niederdruckturbinen-Modul BP ist, und wobei die zweite Welle die Niederdruckturbinenwelle ist.

3. Verfahren nach Anspruch 2, wobei das erste Modul eine erste Welle enthält, wobei der Drehzapfen (111) sich in deren Verlängerung befindet und fest mit dieser verbunden ist.

4. Verfahren zum Zusammenbau nach Anspruch 1, 2 oder 3, das vor dem Verfahrensschritt des Ankoppelns des zweiten Moduls einen vorbereitenden Verfahrensschritt des Aufwärmens des Drehzapfens (111) für die Montage des Außenrings (123) in diesem Drehzapfen aufweist.

5. Verfahren nach dem vorherigen Anspruch, der das Einsetzen eines ringförmigen Heizmittels (300) an dem Drehzapfen (111) zwischen dem Verfahrensschritt des Ankoppelns und der Wärmedehnung des Drehzapfens durch Aufwärmen vorsieht.

6. Verfahren nach Anspruch 1, bei dem die Temperatur des Drehzapfens (111) oder des Außenrings (123) gemessen wird und das Aufwärmen bis zum Erreichen und Halten einer bestimmten Temperatur gesteuert wird.

7. Verfahren nach dem vorherigen Anspruch, bei dem das Ankoppeln des zweiten Moduls vollendet wird, wenn die Werte der Temperaturen einerseits und der Abstandsabweichungen gegenüber dem Drehzapfen (111) andererseits innerhalb vorbestimmter Grenzen liegen.

8. Vorrichtung zur Ausführung des Verfahrens nach Anspruch 1, die ein bewegbares Gestell (210) umfasst, an dem ein ringförmiges Heizmittel (300) des Drehzapfens sitzt, sowie mindestens ein Temperaturfühler (340), der dazu vorgesehen ist, die Temperatur des Drehzapfens zu messen, und ein Mittel (350) zum Messen der radialen Abstandsabweichung zwischen einer Welle, die im Inneren des Drehzapfens einzubauen ist, und einem Bezugspunkt an dem Drehzapfen.

9. Vorrichtung nach dem vorherigen Anspruch, bei der die Halterung des Heizmittels an dem Gestell so ausgeführt ist, dass sie einerseits die Anordnung des Heizmittels um den Drehzapfen herum und andererseits eine umgeklappte Stellung ermöglicht.

10. Vorrichtung nach Anspruch 8 oder 9, bei der das Gestell ein Mittel umfasst, das einen Anschlag bildet, um das Heizmittel und die Messmittel gegenüber dem feststehenden Modul des Motors zu arretieren.

11. Vorrichtung nach Anspruch 8, bei der das ringförmige Heizmittel einen ringförmigen Diffusor (320) für heißes Gas enthält, welches durch mindestens zwei Heizdüsen (310, 312, 314) gespeist wird.

12. Vorrichtung nach Anspruch 8, bei der der Temperaturmessfühler fest mit dem Heizmittel verbunden ist.

13. Vorrichtung nach Anspruch 8, bei der das Mittel zum Messen der radialen Abstandsabweichungen zwischen dem Bezugspunkt und der Welle fest mit dem Gestell verbunden ist.

14. Vorrichtung nach Anspruch 8, die ein Steuermittel umfasst, das das Messsignal für die Temperatur und das Messsignal für den Abstand empfängt und die für den Vorgang des Ankoppelns nötigen Daten liefert.
